# EUROPEAN PATENT SPECIFICATION

(11) **EP 0 734 897 B1**
(45) Date of publication and mention of the grant of the patent: **26.02.2003**
(21) Application number: 96200700.1
(22) Date of filing: 14.03.1996
(51) Int. Cl.: F01P 11/10, F01P 5/06, B60K 11/04

(54) **Cooling structure for construction machine**
Kühlsystem für Baumaschinen
Système de refroidissement pour machine de construction

(30) Priority: 31.03.1995 JP 7605995
(43) Date of publication of application: 02.10.1996
(73) Proprietor: Fiat-Hitachi Excavators S.p.A., 10099 San Mauro Torinese (Torino) (IT)
(72) Inventor: Akira, Tatsumi, Bunkyo-ku, Tokyo (JP); Duri, Gianni, 40027 Mordano, Bologna (IT); Prealta, Dario, 10093 Collegno, Torino (IT)
(74) Representative: Vandenbroucke, Alberic

(56) References cited:
- FR-A- 2 434 268

## Description

The present invention relates to a cooling structure for construction machines such as hydraulically operated excavators, and more particularly to a cooling structure for construction machines wherein an engine is mounted transversely in an engine compartment and whereby air is sucked in by a rotatable fan in order to cool a radiator, and cooling air, after being used for the cooling, is discharged through an engine cover at the top of the engine compartment.

In construction machines such as hydraulically operated excavators, a machine compartment normally comprises an engine, a fan attached to the engine, an oil cooler and a radiator. Ambient air sucked in by the fan for cooling the engine first cools the oil cooler and the radiator, and is then forced to the rear side of the engine through a passage between an upper surface of the engine and an engine cover for cooling the machine compartment, more in particular the engine compartment as primary part of the machine compartment. After being used for the cooling purposes, the hot air is discharged to the environment through exhaust ports formed in an upper wall of the engine cover and through a door of a pump compartment forming part of the machine compartment.

JP-U-62.78325 describes a cooling mechanism for a tractor including an engine mounted longitudinally in an engine compartment which has exhaust ports formed in left and right side panels thereof. First inclined exhaust plates are provided at the interior sides of each of the side panels so that hot air having passed through a radiator, flows toward the rear side of the engine and is discharged to the outside of the engine compartment through the exhaust ports. A second kind of exhaust plates is provided slightly below the left and right side panels so that hot air flowing downward in the engine compartment is discharged to the environment from below the left and right side panels.

In JP-U-57.83019 a cooling structure is described including a first exhaust port formed in an upper wall of an engine compartment for discharging hot air after having passed a radiator and a second exhaust port formed in another part of said upper wall at the rear end of the engine. The second exhaust port, which is positioned somewhat below the first exhaust port, discharges hot air in the direction of the first exhaust port whereby the two streams of hot air collide with each other.

The above mentioned prior art embodiments however have the following disadvantages. When it comes to sufficiently cooling e.g. an oil cooler or a radiator, and improving the heat balance of a vehicle body, it is desired to enlarge the area of heated air exhaust ports. However, if the area of exhaust ports is enlarged, noise created in the machine compartment more easily is transmitted to the environment, resulting in sound pollution. For this reason, there is a limit to the acceptable area of exhaust ports provided. In a hydraulic excavator, generally, a machine compartment is designed to occupy a minimum of space in order to reduce the radius of swing. Also, in order to minimise the obstruction of the operator's view, the passage defined between the upper surface of the engine and the engine cover at the top of the engine compartment is kept narrow. As a result, the flow resistance experienced by the hot air while passing through an engine compartment before being discharged through the exhaust ports is so large that a sufficient cooling ability hardly can be obtained.

Enlarging the area of exhaust ports reduces the flow resistance, but increases sound pollution, as mentioned above. Furthermore, because the exhaust ports commonly are merely apertures provided in an upper wall of the engine cover, the outlet direction of the exhaust ports is not aligned with the direction of the flow of heated air over the engine whereby a turbulent flow of air is created within the engine compartment, resulting in a poor exhaust efficiency with respect to the total area of exhaust ports provided. Simultaneously, the noise level is even more increased because of turbulent flow sounds.

Since the first type of exhaust guide plates in the cooling structure described in JP-U-62.78325 are provided in an inclined position one each of the left and right side panels of the engine compartment, the hot air can be more easily discharged through the exhaust ports. However, this prior art embodiment does not propose appropriate guides inbetween the fan and the exhaust guide plates whereby this structure nevertheless tends to easily cause a turbulent flow of air. Furthermore, this prior art arrangement is suited for a construction machine having its engine mounted in a longitudinally extending machine compartment. Therefore, the teaching of this prior art document cannot be applied to a construction machine with a transversely mounted engine wherein sides of the engine compartment are enclosed e.g. by a cab on the front side and by a counterweight on the rear side.

In the cooling structure described in JP-U-57.83019, the exhaust ports are slots provided in the upper wall of the engine cover, and the direction of the exhaust ports is not aligned with the direction of the heated air flow. Therefore, this prior art arrangement suffers of turbulent air flows being created within the engine compartment. In addition, the slots are provided with differently shaped louvres, resulting in a complicated structure.

It is therefore an object of the present invention to overcome the above disadvantages by providing a cooling structure for a construction machine which minimizes the occurrence of a turbulent air flow, has an improved cooling ability and reduces sound pollution.

According to the present invention, a cooling structure for an industrial vehicle is provided having an engine mounted in an engine compartment and a vertically oriented fan also mounted in said engine compartment and rotatably driven by said engine for drawing ambient air over a radiator and/or oil cooler to cool fluid circulated therethrough; said ambient air, after being used for the cooling, being discharged through an engine cover, and said cooling structure comprising :
- exhaust ports formed in a portion of said engine cover above a front portion of said engine,
- a first guide positioned radially outwardly of said fan; and
- a second guide positioned above the front portion of said engine for guiding the cooling air discharged through said exhaust ports in a continued laminar flow to the environment.

The cooling structure is characterized in that said second guide has a distal end which is positioned at a level below a distal end of said first guide, said exhaust ports extending between the distal ends of said first and second guides and said first guide guides part of the cooling air, after having passed said fan, in a laminar flow to said exhaust ports.

Preferably, the second guide is inclined downwardly towards the fan and the first guide is formed by a portion of the engine cover which is positioned radially outwardly of the fan. A sound shielding partition is provided between the exhaust ports in the engine cover and a rear portion of the vehicle body.

A recess is formed in the portion of the engine cover above the front portion of the engine, the exhaust ports being formed in a slope of the recess facing the fan, and the opposite slope of the recess serving as the second guide.

A third guide may be provided at the exterior side of the engine cover in the vicinity of the exhaust ports so as to shield the exhaust ports against the entrance of rain. Said third guide preferably is inclined such that a passage defined between the third guide and the second guide is gradually narrowed. A sound absorbing material may be attached to the inner side of the third guide to reduce the emission of noise through the exhaust ports.

With the present invention arranged as set forth above, most of the cooling air, having passed the fan, is discharged to the environment in the immediate vicinity of the fan and hence the flow resistance encountered is small. Furthermore, the first and second guides are arranged such that the flow of air discharged through the exhaust ports is laminar which again reduces the flow resistance. In addition, since the amount of cooling air flowing towards the rear side of the engine is reduced, the occurrence of a turbulent flow is suppressed near the exhaust ports at the rear side of the engine as well. As a result, the exhaust efficiency is increased, a sufficient cooling ability is obtained, and the occurrence of turbulent flow sounds is suppressed, resulting in less noise pollution.

A cooling structure in accordance with the present invention will now be described in greater detail, by way of example, with reference to the accompanying drawings, in which :
Figure 1 is a vertical sectional view of a machine compartment of a hydraulically operated excavator with a cooling structure according to a first embodiment of the present invention;
Figure 2 is a side view of the machine compartment of Figure 1, the view being taken from the engine compartment side;
Figure 3 is a perspective view of a section including the machine compartment of the hydraulic excavator as shown in Figure 1;
Figure 4 is a vertical sectional view of a machine compartment of a hydraulic excavator having a conventional cooling structure; and
Figure 5 to 8 are vertical sectional views of a machine compartment each according to a further embodiment of the present invention.

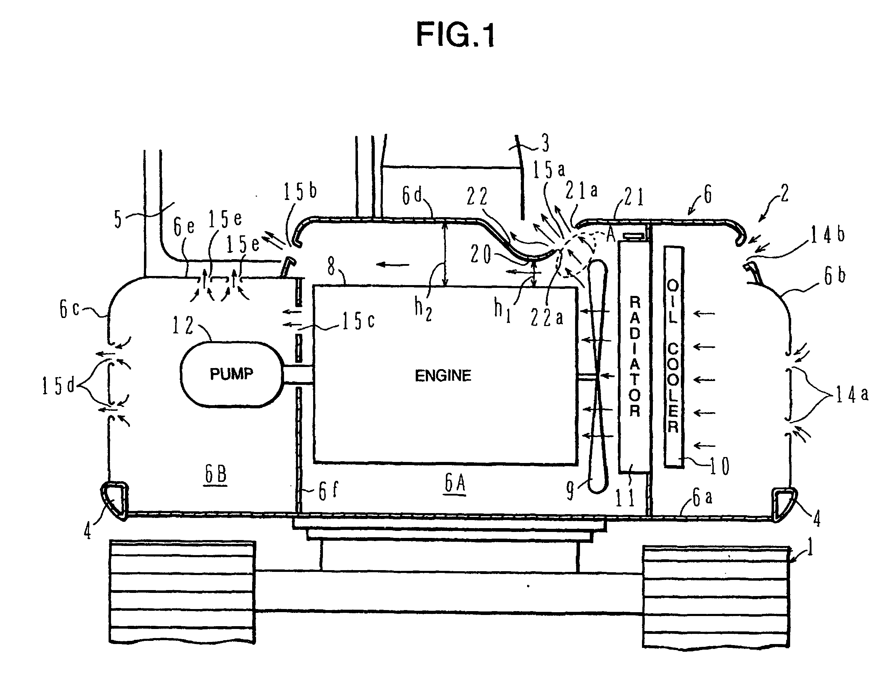

A first embodiment of the present invention will now be described with specific reference to Figures 1 to 3. In Figure 1, reference numeral 1 denotes an undercarriage of a hydraulically operated excavator. An upper structure 2 is rotatably mounted on the undercarriage 1 while a front attachment 3 is pivotally attached to a front portion of the upper structure 2. The upper structure 2 mainly comprises a frame 4 serving as a skeleton structure, a cab 5 installed on a front portion of the frame 4, a machine compartment 6 provided in the frame 4 rearwardly of the cab 5 and a counter weight 7 installed at the rearmost end of the frame 4.

The machine compartment 6 is constructed by a bottom panel 6a, left and right side panels 6b, 6c, an engine cover 6d, and a top panel 6e which are arranged so as to form a box-shaped structure. The machine compartment 6 interiorly is divided by a partition panel 6f into an engine compartment 6A and a pump compartment 6B. Installed in the engine compartment 6A are : an engine 8, a cooling fan 9 attached to the engine 8, an oil cooler 10, a radiator 11 and a muffler (not shown) for discharging engine combustion gasses. A hydraulic pump 12, driven by the engine 8 and operable to pressurize a hydraulic system, is installed in the pump compartment 6B. An air cleaner (not shown) for filtering the engine combustion air is also provided in the same compartment.

Intake ports 14a, 14b are formed respectively in the side panel 6b defining the engine compartment 6A of the machine compartment 6 and a side wall of the engine cover 6d. Exhaust ports 15a, 15b are formed in the engine cover 6d while other exhaust ports 15d, 15e are formed respectively in the side panel 6c defining the pump compartment 6B and the top panel 6e. Apertures 15c are formed in the partition panel 6f. During operation, ambient air sucked in by the fan 9 through the intake ports 14a, 14b cools the oil cooler 10 and the radiator 11, whereafter it is discharged to the environment through the exhaust ports 15a, 15b, 15d and 15e.

As a structural feature of the cooling structure in accordance with this embodiment, a recess 20 is formed in an area of the engine cover 6d above a front portion of the engine 8, and the exhaust ports 15a are formed in an inclined portion of the recess 20 facing the fan 9. In positioning the exhaust ports 15a as such, a space "A" having a proper size is delimited by a portion 21 of the engine cover 6d, the exhaust ports 15a and the fan 9. The portion 21, which is positioned radially outwardly of the fan 9, functions as a first guide for guiding part of the cooling or heated air which has just passed the fan 9, in a laminar flow to the exhaust ports 15a. The exterior surface of another portion 22 of the recess 20 sloping downwardly towards the fan 9 functions as a second guide for guiding the heated air discharged through the exhaust ports 15a in a laminar flow to the environment. A distal end 22a of the second guide 22 is located at a lower level than a distal end 21a of the first guide 21, the exhaust ports 15a being defined therebetween. As such, the exhaust ports 15a extend across the space "A" through which the heated air is supplied by the fan 9 in a laminar flow.

With the exhaust ports 15a and the first and second guides 21, 22 arranged as explained above, most of the heated air having passed the fan 9 is discharged in a laminar flow through the exhaust ports 15a near the fan 9. It will be appreciated that since the distance from the fan 9 to the exhaust ports 15a is very short and the heated air is discharged in a laminar flow, the flow resistance accordingly is very small. Therefore, even if the total area of the exhaust ports 15a is kept small, the exhaust efficiency nevertheless is high and a sufficient cooling ability is obtained.

Additionally, part of the cooling air propelled by the fan 9 flows toward the rear side of the engine 8 through the passage formed between the upper surface of the engine 8 and the bottom portion of the recess 20. It is clear that this passage is reduced in size by the presence of the recess 20. Consequently, since the flow rate of the cooling air towards the rear of the engine 8 is limited appropriately by the throttling action of the recess 20, the air flow rate is moderate and the cooling air is discharged through the exhaust ports 15b, 15d and 15e without causing any turbulence. As a result, the occurrence of turbulent flow sounds is suppressed and noise pollution is reduced.

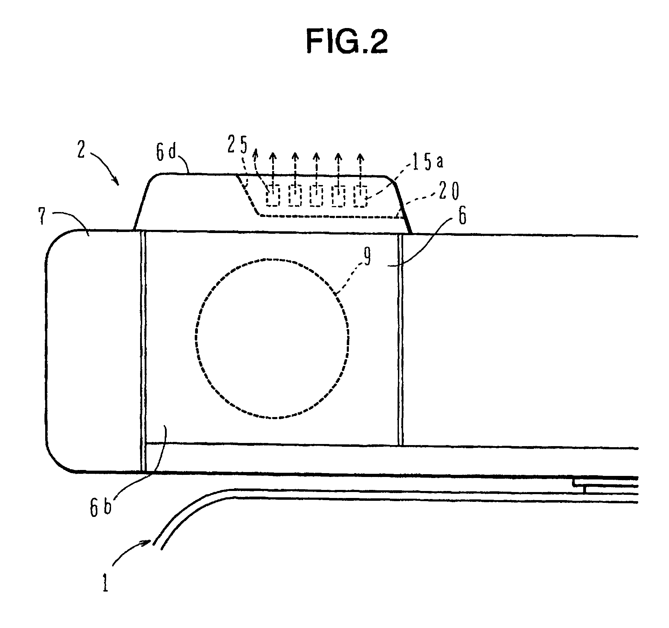

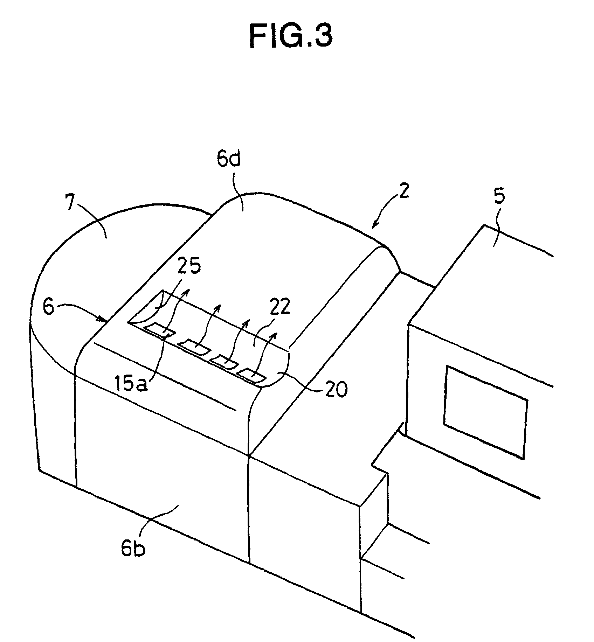

As a further sound reducing feature, shown in Figures 2 and 3, the recess 20 formed in the engine cover 6d is made open at one end in a side wall of the engine cover 6d facing the cab 5, but is terminated at the other side in the vicinity of the counterweight 7, leaving a sound shielding partition 25 between the recess 20 and the counterweight 7. This arrangement prevents noise nevertheless transmitted through the exhaust ports 15a from spreading toward the counterweight 7 which is at the rear of the vehicle body, and hence contributes to further reduce the noise transmitted to the environment.

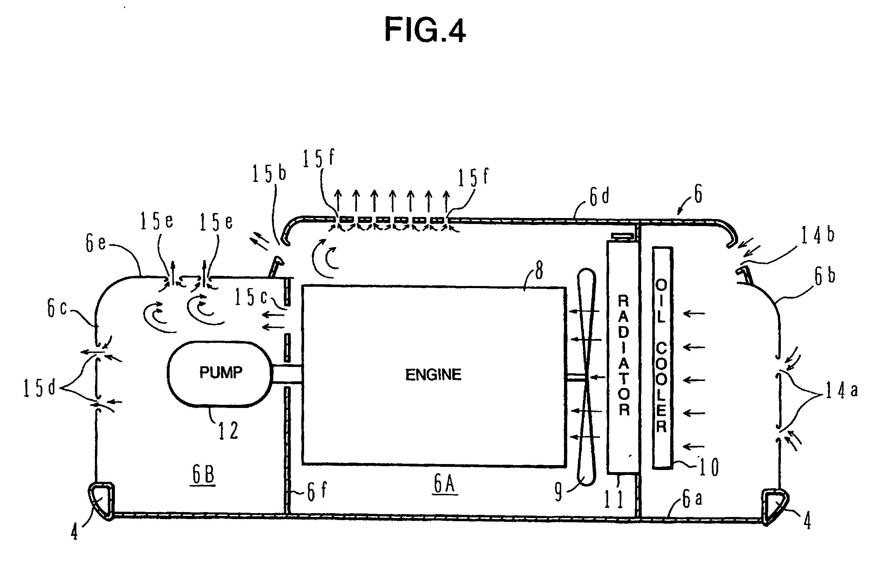

For ease of comparison, a conventional cooling structure is shown in Figure 4 in which a number of exhaust ports 15f are provided in a portion of the engine cover 6d above a rear portion of the engine 8. In the illustrated conventional structure, the flow resistance imposed on the heated air until it is discharged through the exhaust ports 15f, 15b, 15d and 15e after passing through the engine and pump compartments 6A and 6B is so large that a sufficient cooling ability cannot be obtained. Enlarging the area of the exhaust ports reduces the flow resistance, but increases noise pollution. Also, because the exhaust ports 15f are merely plain apertures provided in the engine cover 6d, the direction of the exhaust ports 15f is not aligned with the direction of flow of the heated air and a turbulent flow of air is likely to occur within the engine compartment 6A, resulting in a poor exhaust efficiency when compared to the total area of exhaust ports provided. In addition, turbulent flow sounds are created. Exhaust ports having a large area neither can be formed on the side of the pump compartment 6B again for sound pollution reasons. As a result, a turbulent flow of air occurs near these exhaust ports as well, which then again causes turbulent flow sounds.

Results of experiments made to confirm the advantages of the improved embodiment are as follows :

### (1) Noise Measuring Test

For a wheel type hydraulic excavator of the 15 ton class, noise transmitted to the environment was measured in accordance with the noise measuring method specified in EC Standards, 89/66 EEC. As a result, an average value of the noise measured at four points of the perimeter was 77 dB for the excavator having the conventional structure shown in Figure 4, whereas it was only 72 dB for the excavator having the cooling structure of the embodiment shown in Figures 1 to 3.

### (2) Cooling Ability Test

A wheel type hydraulic excavator of the 15 ton class was run over a mountain path, and stabilized temperatures of the engine cooling water and the hydraulic fluid were measured. The temperatures of the engine cooling water and the hydraulic fluid were both 62 °C above the ambient air temperature for the excavator having the conventional structure shown in Figure 4, whereas both said temperatures were only 55 °C above the ambient air temperature for the excavator having the cooling structure of the embodiment shown in Figures 1 to 3.

From the above results, it thus was confirmed that the cooling structure of the improved embodiment succeeded in reducing the created surrounding noise by 5 dB and improving the cooling ability by 7 °C as compared to the conventional structure.

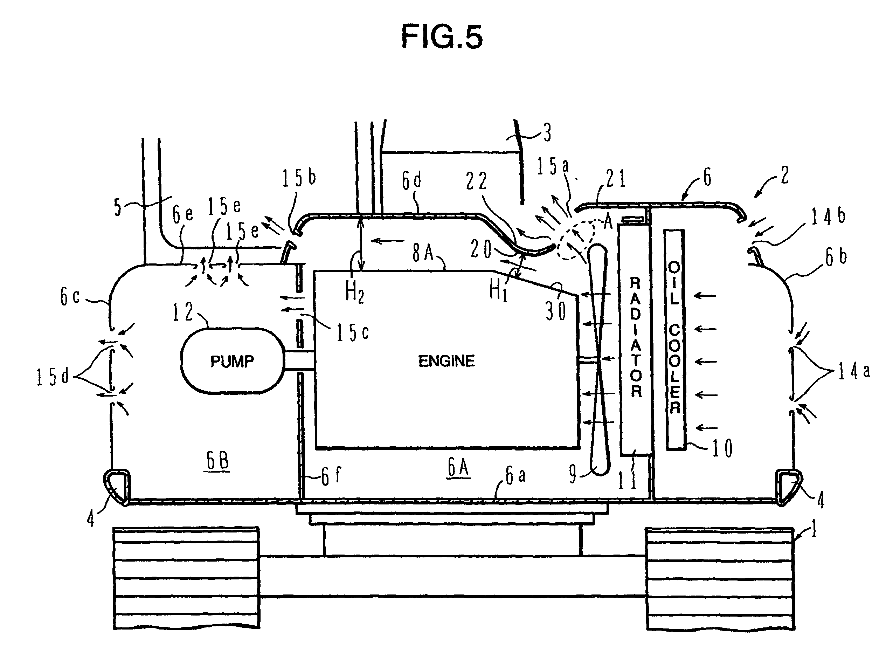

A second embodiment of the present invention will now be described with reference to Figure 5, in which components identical to those shown in Figure 1, are denoted by the same reference numerals. In the cooling structure of this embodiment, an engine 8A is cut off obliquely at its front portion to form an inclined surface 30 as shown, and the engine cover 6d is positioned closer to an upper surface of the engine 8A. Assuming now that, in Figure 1, the distance between the upper surface of the engine 8 and the lower end of the second guide 22 (the recess 20) is h1 and the distance between the upper surface of the engine 8 and the engine cover 6d is h2 and, in Figure 5, the distance between the inclined surface 30 of the engine 8A and the lower end of the second guide 22 (the recess 20) is H1 and the distance between the upper surface of the engine 8A and the engine cover 6d is H2. The relationship between the various distances is : H1 = h1 and H2 < h2.

In the present invention, while most of the cooling air from the fan 9 is discharged in a laminar flow through the exhaust ports 15a, part of the cooling air is required to flow through the passage between the upper surface of the engine 8A and the lower end of the second guide 22 toward the rear side of the engine in order to cool the engine compartment 6A and the pump compartment 6B as well. To this end, a predetermined distance must be ensured between the upper surface of the engine 8A and the lower end of the second guide 22.

Because the distance H1 is maintained equal to the distance h1 of the Figure 1 embodiment, a better cooling ability and a better noise reducing effect, similar to those in the first embodiment, can be obtained. The second embodiment however has the further advantage that since the engine cover 6d can be located at a lower level, the field of view of an operator looking rearwardly from the cab 5 is improved.

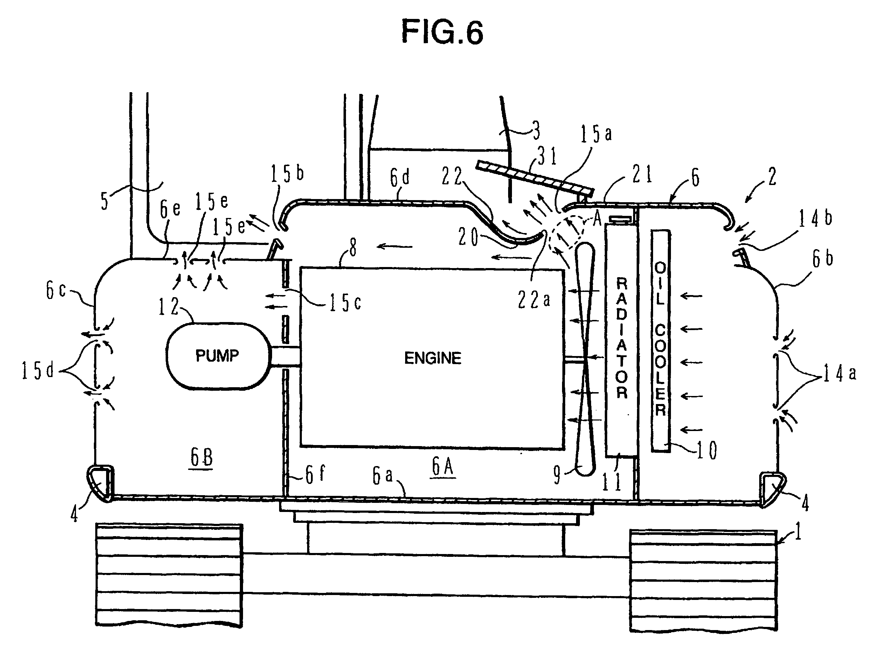

A third embodiment of the present invention is described with reference to Figure 6 in which components identical to those shown in Figure 1 again are denoted by the same reference numerals. The cooling structure of this embodiment includes, in addition to the arrangement shown in Figure 1, a third guide 31 which is disposed outside the engine cover 6d on its upper surface near the exhaust ports 15a in opposite relation to the second guide 22 such as to cover the exhaust ports 15a. The third guide 31 is inclined such that the passage defined between the third guide 31 and the second guide 22 is gradually narrowed. As such, the third guide 31 not only functions as a sound shielding plate to reduce the noise transmitted through the exhaust ports 15a, but also as a cover for the exhaust ports 15a to prevent rain from entering the engine compartment 6A from above. Furthermore, since the third guide 31 is inclined such that the passage defined between the third guide 31 and the second guide 22 is gradually narrowed, the discharged cooling air is guided in a still further improved laminar flow while nevertheless ensuring a sufficient opening area for discharge. As a result, the cooling ability and the noise reducing effect both can be improved further.

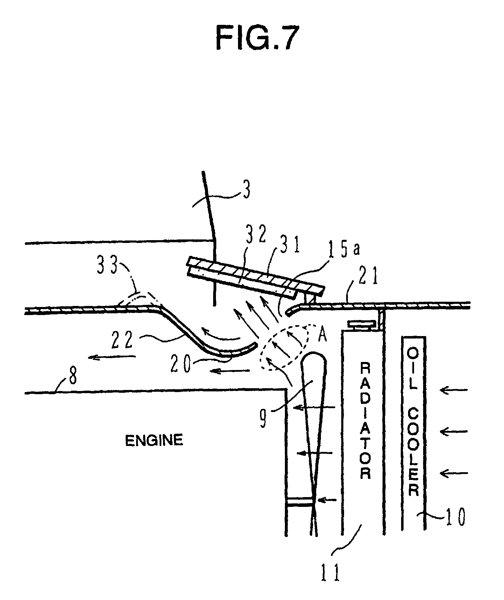

A fourth embodiment of the present invention, shown in Figure 7, comprises, in addition to the arrangement shown in Figure 6, a sound absorbing material 32 made of urethane or the like which is connected to the inner side of the third guide 31. This arrangement is effective in absorbing the noise transmitted through the exhaust ports 15a and therefore further improves the sound reducing effect. As indicated by imaginary lines in Figure 7, a portion of the engine cover 6d adjacent the second guide 22 may be raised to form a dam 33, serving to prevent rainwater on the engine cover 6d from entering the recess 20.

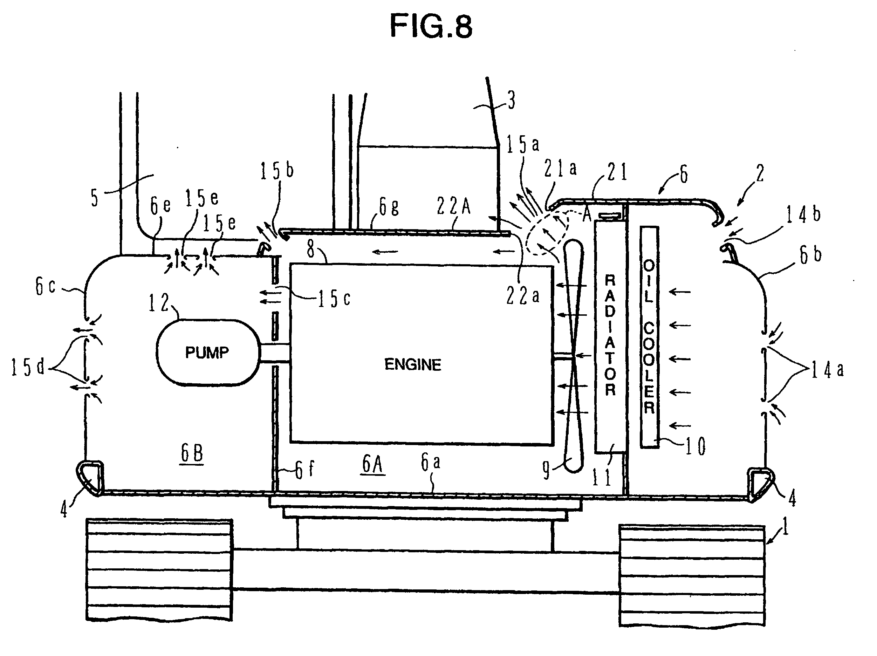

Figure 8 depicts a fifth embodiment of the present invention in which an engine cover 6g is completely flat inbetween the exhaust ports 15a and the rear side of the engine 8. As a second guide 22A forms a part of said cover 6g, it will be appreciated that it is also flat. According to this embodiment, since the second guide 22A is not inclined, the action of guiding the heated air discharged through the exhaust ports 15a in a laminar flow, is lessened, but otherwise substantially the same advantages as in the embodiment of Figure 1 are obtained. In addition however, since the engine cover 6g can be located at a lower level, the field of view of the operator is further improved.

## Claims

1. A cooling structure for an industrial vehicle having an engine (8) mounted in an engine compartment (6A) and a vertically oriented fan (9) also mounted in said engine compartment, and rotatably driven by said engine for drawing ambient air over a radiator and/or oil cooler to cool fluid circulated therethrough; said ambient air, after being used for the cooling, being discharged through an engine cover (6d), and said cooling structure comprising :
- exhaust ports (15a) formed in a portion of said engine cover (6d) above a front portion of said engine (8),
- a first guide (21) positioned radially outwardly of said fan (9); and
- a second guide (22) positioned above the front portion of said engine (8) for guiding the cooling air discharged through said exhaust ports (15a) in a continued laminar flow to the environment; and
**characterized in that** said second guide (22) has a distal end (22a) which is positioned at a level below a distal end (21a) of said first guide (21), said exhaust ports (15a) extending between the distal ends (21a, 22a) of said first and second guides (21, 22) and said first guide (21) guides part of the cooling air, after having passed said fan (9), in a laminar flow to said exhaust ports (15a).

2. A structure according to claim 1 **characterized in that** said second guide (22) is inclined downwardly towards said fan (9).

3. A structure according to any of the preceding claims **characterized in that** said first guide (21) is formed by a portion of said engine cover (6d) which is positioned radially outwardly of said fan (9).

4. A structure according to any of the preceding claims **characterized in that** a sound shielding partition (25) is provided between said exhaust ports (15a) in said engine cover (6d) and a rear portion (7) of the vehicle body.

5. A structure according to any of the preceding claims **characterized in that** a recess (20) is formed in the portion of said engine cover (6d) above the front portion of said engine (8), said exhaust ports (15a) being formed in an inclined portion of said recess (20) facing said fan (9) and the oppositely inclined portion of said recess (20) serving as said second guide (22).

6. A structure according to claim 4 or claim 5 when appended to claim 4, **characterized in that** said recess (20) in said engine cover (6d) is discontinued adjacent to the rear portion (7) of said vehicle body thereby forming said sound shielding partition (25).

7. A structure according to any of the preceding claims **characterized in that** said second guide (22) stops short above the front portion of the engine (8) thereby defining a passage wherethrough part of the cooling air is guided towards the rear end of the engine (8).

8. A structure according to any of the preceding claims **characterized in that** the front portion of said engine (8) is cut off obliquely enabling said engine cover (6d) to be positioned closer to an upper surface of said engine (8).

9. A structure according to any of the preceding claims **characterized in that** a third guide (31) is provided at the exterior side of said engine cover (6d) in the vicinity of said exhaust ports (15a) so as to shield said exhaust ports (15a).

10. A structure according to claim 9 **characterized in that** said third guide (31) is inclined such that a passage defined between said third guide (31) and said second guide (22) is gradually narrowed.

11. A structure according to claims 9 or 10 **characterized in that** a sound absorbing material (32) is attached to the inner side of said third guide (31).

12. A structure according to any of the preceding claims **characterized in that** the engine (8) is mounted transversely to the normal drive direction.

## Patentansprüche

1. Kühlungskonstruktion für ein gewerbliches Fahrzeug mit einem Motor (8), der in einem Motorraum (6A) angeordnet ist, und einem vertikal ausgerichteten Gebläse (9), das ebenfalls in dem Motorraum befestigt ist und von dem Motor in Drehung angetrieben wird, um Umgebungsluft über einen Kühler und/oder Ölkühler anzusaugen, um durch diese zirkulierende Flüssigkeit zu kühlen, wobei die Umgebungsluft nach der Verwendung für die Kühlung durch eine Motorabdeckung (6d) hindurch abgegeben wird, und wobei die Kühlungskonstruktion folgendes umfaßt:
- Auslaßöffnungen (15a), die in einem Teil der Motorabdeckung (6d) oberhalb eines vorderen Teils des Motors (8) ausgebildet sind,
- eine erste Führung (21), die in Radialrichtung außenliegend zu dem Gebläse (9) angeordnet ist; und
- eine zweite Führung (22), die oberhalb des vorderen Teils des Motors (8) angeordnet ist, um die durch die Auslaßöffnungen (15a) abgegebene Kühlluft in einer fortgesetzten laminaren Strömung an die Umgebung zu führen; und
**dadurch gekennzeichnet, daß** die zweite Führung (22) ein fernliegendes Ende (22a) aufweist, das an einer Höhenlage unterhalb eines fernliegenden Endes (21a) der ersten Führung (21) angeordnet ist, wobei sich die Auslaßöffnungen (15a) zwischen den fernliegenden Enden (21a, 22a) der ersten und zweiten Führungen (21, 22) erstrecken und die erste Führung (21) einen Teil der Kühlluft nach deren Hindurchlaufen durch das Gebläse (9) in einer laminaren Strömung zu den Auslaßöffnungen (15a) führt.

2. Konstruktion nach Anspruch 1, **dadurch gekennzeichnet, daß** die zweite Führung (22) in Richtung auf das Gebläse (9) geneigt ist.

3. Konstruktion nach einem der vorhergehenden Ansprüche, **dadurch gekennzeichnet, daß** die erste Führung (21) durch einen Teil der Motorabdeckung (6d) gebildet ist, der in Radialrichtung außerhalb des Gebläses (9) angeordnet ist.

4. Struktur nach einem der vorhergehenden Ansprüche, **dadurch gekennzeichnet, daß** eine Schallabschirmungs-Unterteilung (25) zwischen den Auslaßöffnungen (15a) in der Motorabdeckung (6d) und einem hinteren Teil (7) des Fahrzeugkörpers vorgesehen ist.

5. Konstruktion nach einem der vorhergehenden Ansprüche, **dadurch gekennzeichnet, daß** eine Vertiefung (20) in dem Teil der Motorabdeckung (6d) oberhalb des vorderen Teils des Motors (8) gebildet ist, daß die Auslaßöffnungen (15a) in einem geneigten Teil der Vertiefung (20) gebildet sind, der auf das Gebläse (9) gerichtet ist, und daß der entgegengesetzt geneigte Teil der Vertiefung (20) als die zweite Führung (22) dient.

6. Konstruktion nach Anspruch 4 oder 5 unter Rückbeziehung auf Anspruch 4, **dadurch gekennzeichnet, daß** die Vertiefung (20) in der Motorabdeckung (6d) benachbart zu dem hinteren Teil (7) des Fahrzeugkörpers nicht fortgesetzt ist, wodurch die Schallabschirmungs-Unterteilung (25) gebildet wird.

7. Konstruktion nach einem der vorhergehenden Ansprüche, **dadurch gekennzeichnet, daß** die zweite Führung (22) kurz vor dem vorderen Teil des Motors (8) endet, wodurch ein Durchlaß gebildet wird, durch den hindurch ein Teil der Kühlluft in Richtung auf das hintere Ende des Motors (8) geführt wird.

8. Konstruktion nach einem der vorhergehenden Ansprüche, **dadurch gekennzeichnet, daß** der vordere Teil des Motors (8) schräg abgeschnitten ist, was es ermöglicht, daß die Motorabdeckung (6d) näher an der oberen Oberfläche des Motors (8) angeordnet werden kann.

9. Konstruktion nach einem der vorhergehenden Ansprüche, **dadurch gekennzeichnet, daß** eine dritte Führung (31) auf der Außenseite der Motorabdeckung (6d) in der Nähe der Auslaßöffnungen (15a) angeordnet ist, um die Auslaßöffnungen (15a) abzuschirmen.

10. Konstruktion nach Anspruch 9, **dadurch gekennzeichnet, daß** die dritte Führung (31) so geneigt ist, daß der zwischen der dritten Führung (31) und der zweiten Führung (22) gebildete Durchlaß graduell verengt wird.

11. Konstruktion nach Anspruch 9 oder 10, **dadurch gekennzeichnet, daß** ein schallabsorbierendes Material (32) an der Innenseite der dritten Führung (31) angebracht ist.

12. Konstruktion nach einem der vorhergehenden Ansprüche, **dadurch gekennzeichnet, daß** der Motor (8) quer zur normalen Fahrtrichtung befestigt ist.

## Revendications

1. Structure de refroidissement pour un véhicule industriel possédant un moteur (8) monté dans un compartiment de moteur (6A) et un ventilateur orienté verticalement (9), également monté dans ledit compartiment de moteur, et actionné rotativement par ledit moteur, et aspirant l'air ambiant au travers d'un radiateur et/ou refroidisseur d'huile pour refroidir le fluide y circulant; ledit air ambiant, après avoir été utilisé pour le refroidissement, est évacué via un capot de moteur (6d) et ladite structure de refroidissement comprenenant :
- des orifices d'échappement (15a) formés dans une portion dudit capot de moteur (6d) au-dessus d'une portion avant dudit moteur (8),
- un premier guide (21) positionné radialement à l'extérieur dudit ventilateur (9); et
- un second guide (22) positionné au-dessus de la portion avant dudit moteur (8) pour guider l'air de refroidissement à travers lesdits orifices d'échappement (15a) suivant un écoulement laminaire continu vers l'environnement, et
**caractérisée par le fait que** ledit second guide (22) possède une extrémité terminale (22a) positionnée sous une extrémité terminale (21a) dudit premier guide (21), lesdits orifices d'échappement (15a) s'étendant entre les extrémités terminales (21a, 22a) desdits premier et second guides (21, 22) et ledit premier guide (21) guidant une partie de l'air de refroidissement, après avoir traversé ledit ventilateur (9), suivant un écoulement laminaire vers lesdits orifices d'échappement (15a).

2. Structure selon la revendication 1, **caractérisée en ce que** ledit second guide (22) est incliné vers le bas, vers ledit ventilateur (9).

3. Structure selon l'une quelconque des revendications précédentes, **caractérisée en ce que** le premier guide (21) est formé par une portion dudit capot de moteur (6d) qui positionné radialement à l'extérieur dudit ventilateur (9).

4. Structure selon l'une quelconque des revendications précédentes, **caractérisée en ce qu'**une séparation d'écran sonore (25) est prévue entre lesdits orifices d'échappement (15a) dans ledit capot de moteur (6d) et une portion arrière (7) du bâti de véhicule.

5. Structure selon l'une quelconque des revendications précédentes, **caractérisée en ce qu'**un creux (20) est formé dans la portion dudit capot de moteur (6d) située au-dessus de la portion avant dudit moteur (8), lesdits orifices d'échappement (15a) étant formés dans une portion inclinée dudit creux (20) faisant face audit ventilateur (9) et la portion inclinée opposée dudit creux (20) servant de second guide (22).

6. Structure selon la revendication 4 ou la revendication 5 lorsqu'elle se rapporte à la revendication 4, **caractérisée en ce que** ledit creux (20) dans ledit capot de moteur (6d) est adjacent en discontinu à la portion arrière (7) dudit bâti de véhicule en formant ainsi ladite séparation d'écran sonore (25).

7. Structure selon l'une quelconque des revendications précédentes, **caractérisée en ce que** ledit second guide (22) s'arrête juste au-dessus de la portion avant du moteur (8) en définissant ainsi un passage à travers lequel est guidée une partie de l'air de refroidissement vers l'extrémité arrière du moteur (8).

8. Structure selon l'une quelconque des revendications précédentes, **caractérisée en ce que** la portion avant dudit moteur (8) est tronquée obliquement, permettant de positionner ledit capot de moteur (6d) plus près d'une surface supérieure dudit moteur (8).

9. Structure selon l'une quelconque des revendications précédentes, **caractérisée en ce qu'**un troisième guide (31) est prévu à la face extérieure dudit capot de moteur (6d), à proximité desdits orifices d'échappement (15a), de manière à protéger lesdits orifices d'échappement (15a).

10. Structure selon la revendication 9, **caractérisée en ce que** ledit troisième guide (31) est incliné de sorte qu'un passage défini entre ledit troisième guide (31) et ledit second guide (22) est graduellement rétréci.

11. Structure selon les revendications 9 ou 10 **caractérisée en ce qu'**un matériau insonorisant (32) est fixé à la face intérieure dudit troisième guide (31).

12. Structure selon l'une quelconque des revendications précédentes, **caractérisée en ce que** le moteur (8) est monté transversalement par rapport à la direction normale de conduite.
